# EUROPEAN PATENT APPLICATION

(11) **EP 2 317 765 A1**
(43) Date of publication of application: **04.05.2011**
(21) Application number: 10752512.3
(22) Date of filing: 22.04.2010
(51) Int. Cl.: H04N 7/14, H04N 7/64

(54) **VIDEO DATA RECEPTION AND TRANSMISSION SYSTEM AND VIDEO DATA PROCESSING METHOD FOR VIDEOPHONE**

(30) Priority: 31.08.2009 CN 200910090605
(71) Applicant: ZTE Corporation, Shenzhen, Guangdong 518057 (CN)
(72) Inventor: WAN, Chao, (CN); QUE, Shifeng, (CN); CAI, Yanan, (CN)
(74) Representative: Howson, Richard G.B.
(86) International application number: PCT/CN2010/072085
(87) International publication number: WO 2011/022977

(57) **Abstract**

The present invention discloses a video data receiving system for a videophone, comprising a video pre-decoding module, a key-frame requesting module and a video receiving module; wherein the video pre-decoding module pre-decodes received video data and determines whether the video data are damaged, the key-frame requesting module discards the damaged offset-frame data in the video data and sends a key-frame request signal to the videophone at the opposite end when the number of the continuously discarded offset-frame data reaches a preset value, and the video receiving module receives the coded data from the opposite end. The present invention also correspondingly discloses a video data sending system for the videophone and a video data processing method thereof. In the present invention, error offset-frames are discarded through pre-decoding, and key-frame request signals are sent to reacquire key-frame data when the number of the damaged offset-frame data reaches a preset value so as to reduce mosaic appearing during video receiving and improve the quality of images.

## Description

### TECHNICAL FIELD

The present invention relates to the technical field of communications, and in particular, to a video data receiving system and sending system for a videophone and a video data processing method thereof.

### BACKGROUND

The present society has stepped into the 3G stage. The high-speed transmission capability of 3G communications makes it possible for a mobile terminal to transmit videos, as a result, videophones emerge as the times require. A videophone integrates images and voice together as a whole, capable of realizing the dream of hearing and seeing each other during a call.

In order to realize the functions of a videophone in a public telephone network, International Telecommunication Union (ITU) proposes an H.324 protocol suite which includes the following sub-protocol standards: a voice coding and decoding standard, a video coding and decoding standard, a multiplexing and separation standard for subscriber data and control data (H.223) and a call control standard (H.245). Subsequently, on the basis of ITU H.324M and other international standards, 3GPP works out a 3G-324M framework protocol which can realize real-time multimedia service in a wireless circuit-switched network, enabling video signals, audio signals and control signals to be transmitted on the same 64K physical link.

The 3G-324 protocol defines compulsory media coding standards for multimedia types such as video, audio and data. As for video, the 3G-324 protocol specifies H.263 as a compulsory reference protocol and sets MPEG-4 as a recommended video coding standard.

H.245 is a control signaling protocol in an H.324 protocol multimedia communication system, mainly used for a point-to-point information exchange between H.323 terminals. After a connection is established through a call signaling program, the H.245 control protocol may be used for call management, including a series of processes such as master-slave determination, capability exchange, mode request command, and fast video update, etc., wherein the fast video update command is used for requesting video frame update in case of data loss.

Since signals are inevitably under influences of various factors during a transmission process, the bit error rate is usually high while video communication is very sensitive to the bit error rate, therefore, a great amount of mosaic often covers images when a phone at the receiving end in existing technologies displays the image information.

### SUMMARY

The technical scheme of the present invention aims to provide a video data receiving system and sending system for a videophone and a video data processing method thereof, capable of reducing video mosaic appearing when the videophone receives videos and improving the quality of video images.

In order to realize the above purpose, the present invention provides a video data receiving system for a videophone, comprising a video pre-decoding module, a key-frame requesting module and a video receiving module; wherein
the video pre-decoding module is used for pre-decoding received video data and determining whether the video data are damaged;
the key-frame requesting module is used for discarding damaged offset-frame data in the video data and sending a key-frame request signal to a videophone at the opposite end when the number of continuously discarded offset-frame data reaches a preset value; and
the video receiving module is used for receiving coded data generated by the videophone at the opposite end via coding current transmitted video data in accordance with the key-frame request signal, wherein the coded data are a frame of key-frame data.

The system may also comprise a video analyzing module for analyzing the type of the received video data.

The system may also comprise a video data caching module and a video decoding module; wherein
the video data caching module is used for caching video data received by the video receiving module;
the video pre-decoding module described is also used for de-coding the video data cached by the video data caching module and determining whether the video data are damaged;
the video analyzing module is also used for analyzing the type of the video data cached by the video data caching module;
the key-frame requesting module is also used for sending the video data to the video decoding module for decoding in accordance with the judgment result of the video pre-decoding module and the analysis result of the video analyzing module when the video data cached by the video data caching module are determined to be right or to be I-frame data although wrong; and
the video decoding module is used for decoding the video data from the key-frame requesting module.

The video pre-decoding module may determine whether the video data are damaged in the following way: the video pre-decoding module analyzes key information of the video data in accordance with the syntax and the semanteme of video image data specified in a video coding standard to determine whether the video data are damaged.

The present invention also provides a video data sending system for a videophone, comprising a key-frame responding module, a video coding module and a video sending module; wherein
the key-frame responding module is used for receiving a key-frame request signal sent from a videophone at the opposite end;
the video coding module is used for coding current transmitted video data to generate coded data in accordance with the key-frame request signal received by the key-frame responding module, wherein the coded data are a frame of key-frame data; and
the video sending module is used for sending the coded data to the videophone at the opposite end after the video coding module generates the coded data.

The video coding module may be also used for coding all original video data sent to the videophone at the opposite end in accordance with the video coding standard, wherein key-frame data and offset-frame data are arranged regularly.

The present invention also provides a video data processing method for a videophone, which receives video data through a video data receiving system of the videophone, comprising the following steps:
a video pre-decoding module pre-decodes received video data and determines whether the video data are damaged;
a key-frame requesting module discards damaged offset-frame data in the video data and sends a key-frame request signal to a videophone at the opposite end when the number of continuously discarded offset-frame data reaches a preset value; and
a video receiving module receives coded data generated by the videophone at the opposite end via coding current transmitted video data in accordance with the key-frame request signal, wherein the coded data are a frame of key-frame data.

After the video pre-decoding module pre-decodes the received video data, the method may also comprise the following steps:
a video analyzing module analyzes the type of the video data and determines whether the video data are key-frame data or offset-frame data, and then discards the damaged offset-frame data in the video data through the key-frame requesting module.

The method may also comprise the following step: a video coding module decodes a pre-decoded video data stream.

In the video data receiving system and sending system for a videophone and the video data processing method thereof, after the video data sent from the videophone at the opposite end are received and before decoding is performed, offset frames with error key data are filtered or discarded through pre-decoding to reduce the number of error data frames displayed by the videophone, and a key-frame request signal is sent to the videophone at the opposite end when the number of damaged offset-frames reaches a preset value to reacquire key-frame data, so as to restrict error offset-frame data in time. Therefore, video mosaic can be reduced, the smoothness of the video display can be improved, and particularly in the condition that the network environment is not good, clearer video images can be provided and user experience can be enhanced.

### BRIEF DESCRIPTION OF THE DRAWINGS

Fig. 1 is a diagram illustrating the structure of the videophone in a specific embodiment of the present invention;
Fig. 2 is a flowchart illustrating communication between a first videophone and a second videophone in a specific embodiment of the present invention; and
Fig. 3 is a flowchart illustrating a video data processing method in a specific embodiment of the present invention.

### DETAILED DESCRIPTION

In order to make the purpose, technical scheme and advantages of the present invention clearer, the present invention will be described in details as follows, in combination with the attached drawings and specified embodiments.

In the video data receiving system and sending system for a videophone and the video data processing method thereof, before video data are decoded and played, severely damaged offset-frame data in the video information are filtered, and a key-frame request signal is sent to a videophone at the opposite end when the number of damaged offset frames reaches a preset value to reacquire corresponding key-frame data, thus errors can be restricted in time and the purposes of reducing video mosaic and improving the quality of video images can be achieved.

Based on the above description, the video data receiving system for the videophone in the present invention comprises:
a video pre-decoding module, which is used for pre-decoding each frame of received video data and determines whether the video data are damaged;
a key-frame requesting module, which is used for discarding damaged offset-frame data in the video data and sending a key-frame request signal to a videophone at the opposite end when the number of continuously discarded offset-frame data reaches a preset value; and
a video receiving module, which is used for receiving coded data generated by the videophone at the opposite end via coding current transmitted video data in accordance with the key-frame request signal, wherein the coded data are a frame of key-frame data.

Through the structure of the video data receiving system for the videophone described in the present invention, the video pre-decoding module is utilized to pre-decode each frame of the received video data and determine whether the video data are damaged; the key-frame requesting module is utilized to discard the damaged offset-frame data in the video data and send a key-frame request signal to the videophone at the opposite end when the number of the continuously discarded offset-frame data reaches a preset value; then the video receiving module is utilized to receive the key-frame data generated by the videophone at the opposite end via coding the current transmitted video data in accordance with the key-frame request signal.

During video data transmission between the videophone and the videophone at the opposite end, original video data are coded in accordance with the video coding standard, wherein the key-frame data and the offset-frame data are alternatively arranged in accordance with certain regularity. When receiving the key-frame request signal, the videophone at the opposite end immediately converts the video data which are expected to be coded into offset-frame data into key-frame data through coding, so that the error offset-frame data occurring previously at the receiving end can be restricted in time.

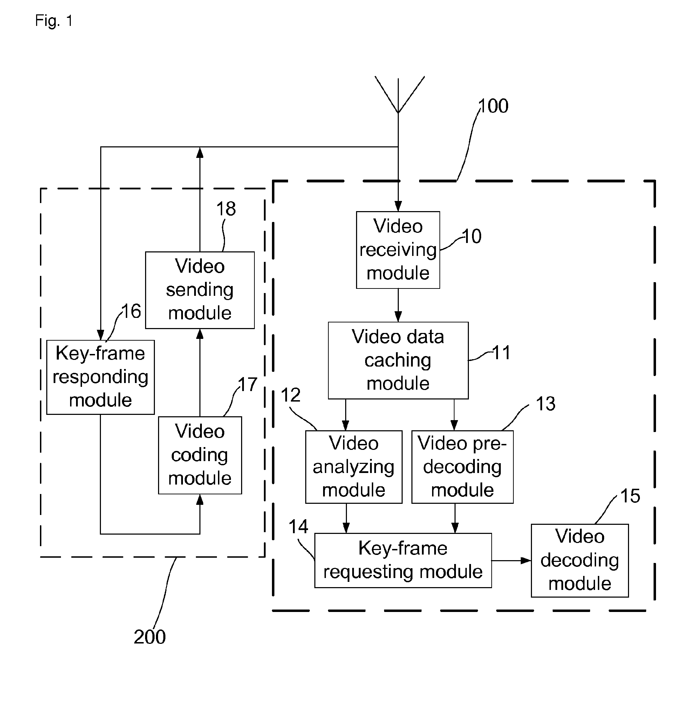

Specifically, the structure schematic diagram of the videophone in a specific embodiment of the present invention is as shown in Fig. 1. The videophone comprises a video data receiving system 100 and a video data sending system 200, wherein the video data receiving system 100 further comprises:
a video receiving module 10, used for receiving video data sent from the videophone at the opposite end;
a video data caching module 11, used for caching each frame of video data received by the video receiving module 10;
a video analyzing module 12, used for analyzing the type of each frame of video data cached by the video data caching module 11 and determining whether each frame of video data are key frame data or offset frame data;
a video pre-decoding module 13, used for performing a pre-decoding analysis of each frame of video data cached by the video data caching module 11 and determining whether the key data in each frame of video data are damaged;
a key-frame requesting module 14, used for directly discarding a frame of data when the damaged data are offset frame (P-frame) data in accordance with the pre-decoding result from the video pre-decoding module 13 and the type of each frame of data analyzed and determined by the video analyzing module 12; counting the number of continuously discarded offset frames and sending a key-frame request signal to the videophone at the opposite end in accordance with the H.245 protocol when the number of the continuously discarded offset frames reaches a preset value (for example, 3); and sending the video data to the video decoding module for decoding when determining that the video data cached by the video data caching module are error-free or are I-frame data although wrong;

In accordance with the received key-frame request signal, the videophone at the opposite end sends current transmitted video data to the video receiving module 10 of the videophone at the receiving end after coding the current transmitted video data into key-frame data, namely, when the key-frame request signal is received, although P-frame data are expected to be coded and sent at present in accordance with the regularity of the interval between the key-frame data and the offset-frame data, in order to restrict error P-frame data occurring previously at the receiving end in time, I-frame data are coded and generated, and then are sent to the video receiving module 10 of the videophone;
a video decoding module 15, which is used for decoding the video data from the key-frame requesting module, so that the videophone can play video images corresponding to the video code stream.

Besides, in order to realize a video image exchange between the videophone and the videophone at the opposite end and receive the key-frame request signal sent by the videophone at the opposite end, the videophone in the specific embodiment of the present invention also comprises a video data sending system 200, as shown in Fig. 1. The video data sending system 200 comprises:
a key-frame responding module 16, used for receiving and analyzing the key-frame request signal sent from the videophone at the opposite end;
a video coding module 17, used for coding original video image data and generating a frame of key-frame data by coding current transmitted video data in accordance with the response of the key-frame responding module 16 to the key-frame request signal; and
a video sending module 18, used for sending coded video image data to the videophone at the opposite end, including sending a frame of key-frame data generated by the video coding module 17 after the key-frame responding module 16 responds the key-frame request signal.

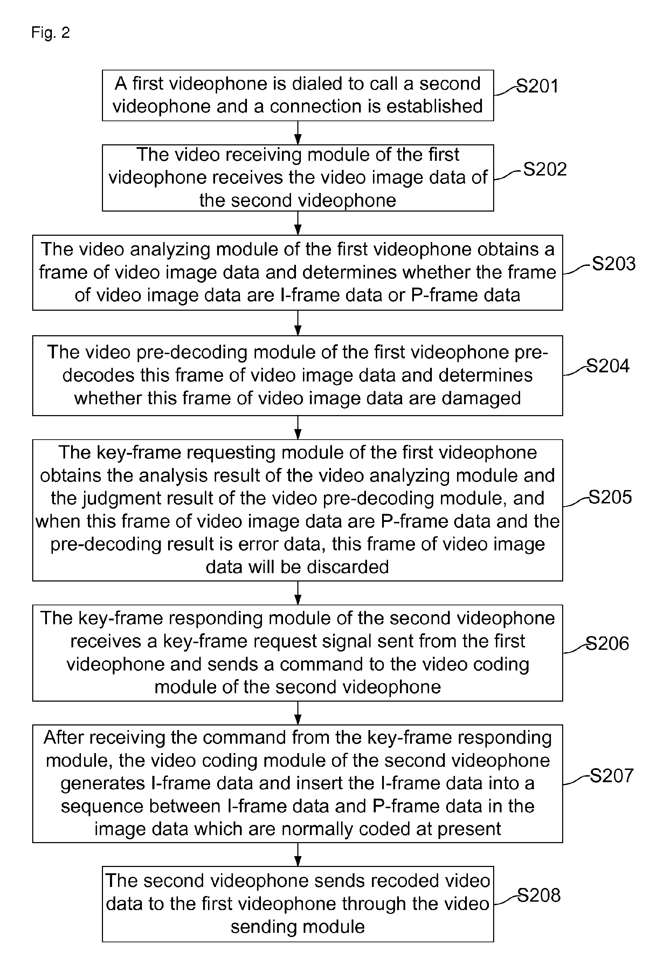

A video image processing process in which the videophone in the specific embodiment of the present invention is adopted will be illustrated by taking a communication process between a first videophone and a second videophone as an example. Fig. 2 is a flowchart illustrating the video image processing process. As shown in Fig. 2, the process comprises the following steps:
Step S201: after dialing is performed between the first videophone and the second videophone and the connection is established, the two parties can see the video image of each other and have a talk;
Step S202: the video receiving module of the first videophone receives the video image data of the second videophone, and saves each frame of the video image into the video data caching module of the first videophone;
Step S203: the video analyzing module of the first videophone obtains a frame of video image data from the video data caching module, and analyzes and determines whether this frame of video image data are I-frame data or P-frame data in accordance with frame head information of this frame of video image data;
Step S204: the video pre-decoding module of the first videophone pre-decodes this frame of video image data, and analyzes key information of the video data in accordance with the syntax and the semanteme specified in the H.263 protocol standard to determine whether this frame of video image data are damaged.

In accordance with the syntax and the semanteme of a video image data frame organized by the H.263 protocol standard, the syntax of the video image data frame is divided into four layers from top to bottom, which are respectively: a Picture layer, a Group-of-Blocks (GOB) layer, a Macro block layer and a Block layer.

Wherein for the Picture layer, the Picture layer of each frame of video image data comprises a picture header, a Group of Blocks behind the picture header, and finally, an end-of-sequence code and a stuffing bit.

For the GOB layer, each GOB layer comprises a GOB header and Macro block data closely following the GOB header, wherein each GOB layer comprises one line or a plurality of lines of Macro blocks.

For the Macro block layer, each Macro blocks layer comprises a macro block header and subsequent data for blocks.

It is necessary for each frame of video image data to conform to the format requirement of the H.263 protocol standard, wherein some key information in each frame of video image data is required to be a specific value, for example, the value of the Picture Start Code (PSC) in the Picture layer (picture header) in the H.263 protocol standard is required to be 0000 0000 0000 0000 1 00000, starting with this code.

The video pre-decoding module of the first videophone analyzes this frame of video image data in accordance with the rules specified in the H.263 protocol standard; if it is confirmed that there's an error in the key information of this frame of video image data, for example, there's an error in the PSC, then it will be considered that this frame of data have been damaged severely. Those skilled in the art are expected to master the technology of determining whether the key information of the video image data has been damaged in accordance with the H.263 protocol standard, which will not be explained in detail here again.

Step S205: the key-frame requesting module of the first videophone obtains the analysis result of the video analyzing module and the judgment result of the video pre-decoding module, and directly transmits this frame of video image data to the video decoding module of the first videophone for coding and playing when the pre-decoding result of this frame of video image data is normal data, or although being error data, this frame of video image data are I-frame data; the key-frame requesting module of the first videophone discards this frame of video image data and counts the number of error frames of P-frame data when this frame of video image data are P-frame data and the pre-decoding result is error data, and sends a key-frame request signal to the second videophone in accordance with the H.245 protocol standard if the number of continuous error frames reaches 3.

Step S206: when receiving the key-frame request signal sent from the first videophone, the key-frame responding module of the second videophone sends a command to the video coding module of the second videophone.

Step S207: after receiving the command from the key-frame responding module, the video coding module of the second videophone immediately generates I-frame data in accordance with the current transmitted video data and inserts the I-frame data into a sequence between I-frame data and P-frame data in the image data (an I-frame is followed by 50 P-frames) normally coded at present.

Step S208: the second videophone sends the video data to the first videophone through the video sending module.

The videophone, in the specific embodiment of the present invention, filters or discards offset frames with error key data through pre-decoding after receiving video data sent from the videophone at the opposite end and before decoding the data, and sends a key-frame request signal to the videophone at the opposite end to reacquire corresponding key-frame data when the number of the damaged offset frames reaches a preset value, thus being capable of restricting error video image data in time and achieving the purposes of reducing the number of video mosaic and improving the quality of the video images.

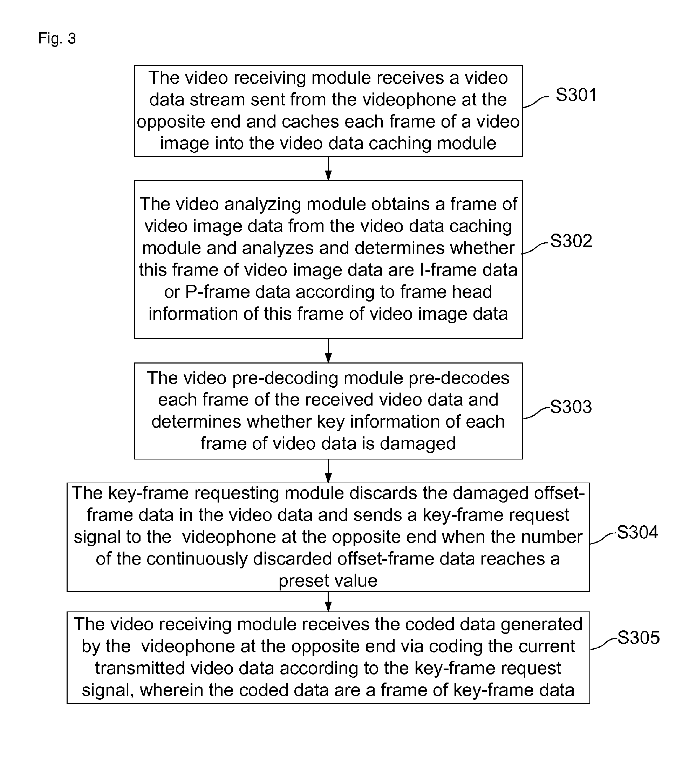

A video data processing method is also provided in accordance with another aspect of the specific embodiment of the present invention, which receives video data by adopting the video data receiving system of the videophone. As shown in Fig. 3, the video data processing method in the specific embodiment of the present invention comprises the following steps:
Step S301: the video receiving module receives a video data stream sent from the videophone at the opposite end, and caches each frame of the video image into the video data caching module.
Step S302: the video analyzing module obtains a frame of video image data from the video data caching module, and analyzes and determines whether this frame of video image data are I-frame data or P-frame data in accordance with the frame head information of this frame of video image data.
Step S303: the video pre-decoding module pre-decodes each frame of the received video data and determines whether the key information of each frame of the video data is damaged.
Step S304: the key-frame requesting module discards the damaged offset-frame data in the video data and sends a key-frame request signal to the videophone at the opposite end when the number of the continuously discarded offset-frame data reaches a preset value.
Step S305: the video receiving module receives coded data generated by the videophone at the opposite end via coding the current transmitted video data in accordance with the key-frame request signal, wherein the coded data are a frame of key-frame data.

Wherein after receiving a command from the key-frame responding module, the video coding module of the videophone at the opposite end replaces P-frame data with I-frame data, wherein the P-frame data are expected to be coded and sent at present in accordance with the video coding standard, and inserts the I-frame data into a sequence between I-frame data and P-frame data in the normally coded image data (an I-frame is followed by 50 P-frames).

By using the systems and the method described in the specific embodiment of the present invention, data with severely damaged video information can be filtered, and a key-frame request signal may be sent when the number of error offset-frames reaches a certain value, so that errors can be restricted in time, video mosaic can be thus reduced, the smoothness of the video display can be improved, and particularly in the condition that the network environment is not good, clearer video images can be provided and user experience can be enhanced.

The above descriptions are just preferred embodiments of the present invention. It should be pointed out that for the skilled in the art, without departing from the principle of the present invention, various improvements and modifications can be made to the present invention, which should also be included within the protection scope of the present invention.

## Claims

1. A video data receiving system for a videophone, the system comprising a video pre-decoding module, a key-frame requesting module and a video receiving module; wherein
the video pre-decoding module being used for pre-decoding received video data and determining whether the video data are damaged;
the key-frame requesting module being used for discarding damaged offset-frame data in the video data and sending a key-frame request signal to a videophone at the opposite end when the number of continuously discarded offset-frame data reaches a preset value; and
the video receiving module being used for receiving coded data generated by the videophone at the opposite end via coding current transmitted video data in accordance with the key-frame request signal, the coded data being a frame of key-frame data.

2. The system in accordance with claim 1, further comprising a video analyzing module for analyzing the type of the received video data.

3. The system in accordance with claim 2, further comprising a video data caching module and a video decoding module; wherein
the video data caching module is used for caching video data received by the video receiving module;
the video pre-decoding module is also used for pre-decoding the video data cached by the video data caching module and determining whether the video data are damaged;
the video analyzing module is also used for analyzing the type of the video data cached by the video data caching module;
the key-frame requesting module is also used for sending the video data to the video decoding module for decoding when the video data cached by the video data caching module are determined to be right or to be I-frame data although wrong in accordance with the judgment result of the video pre-decoding module and the analysis result of the video analyzing module; and
the video decoding module is used for decoding the video data from the key-frame requesting module.

4. The system in accordance with claim 1, wherein the video pre-decoding module determines whether the video data are damaged in the following way: the video pre-decoding module analyzes key information of the video data in accordance with the syntax and the semanteme of video image data specified in a video coding standard to determine whether the video data are damaged.

5. A video data sending system for a videophone, the system comprising a key-frame responding module, a video coding module and a video sending module; wherein
the key-frame responding module being used for receiving a key-frame request signal sent from a videophone at the opposite end;
the video coding module being used for coding current transmitted video data to generate coded data in accordance with the key-frame request signal received by the key-frame responding module, wherein the coded data are a frame of key-frame data; and
the video sending module being used for sending the coded data to the videophone at the opposite end after the video coding module generates the coded data.

6. The system in accordance with claim 5, wherein the video coding module is also used for coding all original video data sent to the videophone at the opposite end in accordance with a video coding standard, and key-frame data and offset-frame data are arranged regularly.

7. A video data processing method for a videophone, which receives video data through a video data receiving system of the videophone, the method comprising:
a video pre-decoding module pre-decoding received video data and determining whether the video data are damaged;
a key-frame requesting module discarding damaged offset-frame data in the video data and sending a key-frame request signal to a videophone at the opposite end when the number of continuously discarded offset-frame data reaches a preset value; and
a video receiving module receiving coded data generated by the videophone at the opposite end via coding current transmitted video data in accordance with the key-frame request signal, the coded data being a frame of key-frame data.

8. The method in accordance with claim 7, after the video pre-decoding module pre-decoding the received video data, the method also comprising:
a video analyzing module analyzes the type of the video data and determines whether the video data are key-frame data or offset-frame data, and then discards damaged offset-frame data in the video data through the key-frame requesting module.

9. The method in accordance with claim 7, further comprising: a video coding module decodes a pre-decoded video data stream.
